(19) Europäisches Patentamt
European Patent Office
Office européen des brevets

(11) EP 4 796 592 A1

# (12) EUROPEAN PATENT APPLICATION

published in accordance with Art. 153(4) EPC

(43) Date of publication:
**26.08.2026 Bulletin 2026/35**

(21) Application number: **24875717.1**

(22) Date of filing: **30.08.2024**

(51) International Patent Classification (IPC):
***C08L 33/20*** *(2006.01)* ***C08L 51/04*** *(2006.01)*

(52) Cooperative Patent Classification (CPC):
(C-Sets available)
**C08L 33/20; C08L 51/04;** C08L 2201/10; C08L 2205/025; C08L 2205/03 (Cont.)

(86) International application number:
**PCT/KR2024/013039**

(87) International publication number:
**WO 2025/084607 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 KR 20230140052**

(71) Applicant: **LG CHEM, LTD.**
**Seoul 07336 (KR)**

(72) Inventors:
- **SHIM, Hyungseop**
**Daejeon 34122 (KR)**
- **YOO, Je Sun**
**Daejeon 34122 (KR)**
- **JANG, Seokgoo**
**Daejeon 34122 (KR)**
- **SHIN, Dong Kun**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

## (54) THERMOPLASTIC RESIN COMPOSITION, PREPARATION METHOD THEREFOR, AND MOLDED ARTICLE INCLUDING SAME

(57) The present invention relates to a thermoplastic resin composition, a method of preparing the same, and a molded article including the same. According to the present invention, conventional transparent ABS-based resins may be replaced, chemical resistance to detergents including alcohols or disinfectants including cyclopentane may be improved, and transparency may be excellent.

EP 4 796 592 A1

(52) Cooperative Patent Classification (CPC): (Cont.)

C-Sets
**C08L 33/20, C08L 51/003, C08L 51/003**

## Description

[Technical Field]

[Cross-Reference to Related Application]

This application claims priority to Korean Patent Application No. 10-2023-0140052, filed on October 19, 2023, in the Korean Intellectual Property Office, the disclosure of which is incorporated herein by reference.

The present invention relates to a thermoplastic resin composition, a method of preparing the same, and a molded article including the same, and more particularly, to a thermoplastic resin composition capable of providing chemical resistance to detergents including alcohols or disinfectants and implementing excellent transparency, a method of preparing the thermoplastic resin composition, and a molded article including the thermoplastic resin composition.

[Background Art]

Vinyl cyanide compound-conjugated diene rubber-aromatic vinyl compound graft copolymers (hereinafter referred to as 'ABS-based resin') have the rigidity and chemical resistance of acrylonitrile, the secondary processability and mechanical strength of butadiene and styrene, and an aesthetically pleasing appearance, and thus have been applied to various fields such as automotive supplies, electrical/electronic products, and office equipment.

By introducing a methacrylic acid alkyl ester into an ABS-based resin, the ABS-based resin is applied to products requiring transparency. In the case of these transparent ABS-based resins, there is a problem of whitening occurring due to poor chemical resistance to detergents or disinfectants.

Therefore, there is a need for the development of a thermoplastic resin composition that can be used instead of conventional transparent ABS materials, has chemical resistance to detergents including alcohols or disinfectants, and provides transparency.

[Related Art Documents]

[Patent Documents]

Chinese Patent Application Publication No. 114316112

[Disclosure]

[Technical Problem]

Therefore, the present invention has been made in view of the above problems, and it is one object of the present invention to provide a thermoplastic resin composition capable of implementing excellent physical property balance between chemical resistance to detergents including alcohols or disinfectants and transparency and a method of preparing the thermoplastic resin composition.

It is another object of the present invention to provide a molded article manufactured using the thermoplastic resin composition.

The above and other objects can be accomplished by the present invention described below.

[Technical Solution]

I) In accordance with one aspect of the present invention, provided is a thermoplastic resin composition including 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B), wherein, based on 100 % by weight in total thereof, the methacrylic acid alkyl ester compound-aromatic vinyl compound-vinyl cyanide compound copolymer (B) includes 80 % by weight or less of a methacrylic acid alkyl ester compound, and the (A-1) and (A-2) are included in a weight ratio (A-1:A-2) of 1:0.8 to 1:3.1.

II) According to I), based on 100 % by weight in total of (A) and (B), the acrylic graft copolymer (A-1) may be included in an amount of 15 to 25 % by weight.

III) According to I) or II), based on 100 % by weight in total thereof, the acrylic graft copolymer (A-1) may include 30 to 70 % by weight of an acrylate rubber polymer having an average particle diameter of 50 to 120 nm, 30 to 50 % by weight of an aromatic vinyl compound, and 10 to 30 % by weight of a vinyl cyanide compound.

IV) According to I) to III), based on 100 % by weight in total of (A) and (B), the acrylic graft copolymer (A-2) may be included in an amount of 25 to 35 % by weight.

V) According to I) to IV), a total amount of the (A-1) and (A-2) may be 43 to 57 % by weight.

VI) According to I) to V), based on 100 % by weight in total thereof, the acrylic graft copolymer (A-2) may include 30 to 70 % by weight of an acrylate rubber polymer having an average particle diameter of 50 to 120 nm, 30 to 50 % by weight of an aromatic vinyl compound, and 10 to 30 % by weight of a vinyl cyanide compound.

VII) According to I) to VI), based on 100 % by weight in total thereof, the methacrylic acid alkyl ester compound-aromatic vinyl compound-vinyl cyanide compound copolymer (B) may include 60 to 80 % by weight of a methacrylic acid alkyl ester compound, 10 to 30 % by weight of an aromatic vinyl compound, and 5 to 15 % by weight of a vinyl cyanide compound.

VIII) According to I) to VII), the methacrylic acid alkyl ester compound-aromatic vinyl compound-vinyl cyanide compound copolymer (B) may have a weight average molecular weight of 90,000 to 200,000 g/mol.

IX) According to I) to VIII), the thermoplastic resin composition may be an alcohol-resistant thermoplastic resin composition.

The thermoplastic resin composition may be used in household/appliance products, kitchenware, or bathroom products.

X) According to I) to IX), when a 3 mm thick sheet is immersed in a 70 % aqueous isopropanol solution for 24 hours, the sheet is taken out of the solution and left for 30 minutes, and transparency is measured according to ASTM D1003, and when transparency before immersion is measured according to ASTM D1003, the thermoplastic resin composition may have a transparency maintenance of 2.5 or less, calculated based on the transparency before immersion and the transparency after immersion.

XI) According to I) to X), the thermoplastic resin composition may have a tensile strength of 300 kg/cm.cm or more as measured at 50 mm/min according to ASTM D638.

XII) In accordance with another aspect of the present invention, provided is a method of preparing a thermoplastic resin composition, the method including melt-kneading and extruding 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B), wherein, based on 100 % by weight in total thereof, the methacrylic acid alkyl ester compound-aromatic vinyl compound-vinyl cyanide compound copolymer (B) includes 80 % by weight or less of a methacrylic acid alkyl ester compound; and the (A-1) and (A-2) are included in a weight ratio (A-1:A-2) of 1:0.8 to 1:3.1.

XIII) In accordance with still another aspect of the present invention, provided is a method of preparing a thermoplastic resin composition, the method including melt-kneading and extruding 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B), wherein, based on 100 % by weight in total thereof, the methacrylic acid alkyl ester compound-aromatic vinyl compound-vinyl cyanide compound copolymer (B) includes 80 % by weight or less of a methacrylic acid alkyl ester compound; and when a 3 mm thick sheet is immersed in a 70 % aqueous isopropanol solution for 24 hours, the sheet is taken out of the solution and left for 30 minutes, and transparency is measured according to ASTM D1003, and when transparency before immersion is measured according to ASTM D1003, the thermoplastic resin composition has a transparency maintenance of 2.5 or less, calculated based on the transparency before immersion and the transparency after immersion.

XIV) In accordance with yet another aspect of the present invention, provided is a molded article including the thermoplastic resin composition described above.

XV) According to XIV), the molded article may be a product exposed to detergents including alcohols or disinfectants.

XVI) According to XIV), the molded article may be a transparent container or a transparent part.

[Advantageous Effects]

The thermoplastic resin composition according to the present invention provides excellent physical property balance between chemical resistance to detergents including alcohols or disinfectants and transparency.

That is, a molded article manufactured using the thermoplastic resin composition according to the present invention has excellent chemical resistance to detergents including alcohols or disinfectants and excellent transparency.

Accordingly, the thermoplastic resin composition according to the present invention and the molded article

manufactured using the same can be applied to transparent containers that are repeatedly exposed to detergents including alcohols or disinfectants and transparent parts for home appliances.

[Best Mode]

Hereinafter, the present invention will be described in more detail to help understand the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

The present inventors confirmed that, in a methacrylic acid alkyl ester compound-aromatic vinyl compound-vinyl cyanide compound copolymer, by controlling the content of a methacrylic acid alkyl ester compound and including acrylic graft copolymers within an appropriate mixing ratio, the physical property balance between chemical resistance to detergents including alcohols or disinfectants including cyclopentane and transparency was implemented. Based on these findings, the present inventors conducted further study to complete the present invention.

Hereinafter, each component of the thermoplastic resin composition of the present invention will be described in detail.

(A) Acrylic graft copolymer

The acrylic graft copolymer (A) may include an acrylic graft copolymer (A-1) containing an acrylate rubber polymer having an average particle diameter of 50 to 120 nm; and an acrylic graft copolymer (A-2) containing an acrylate rubber polymer having an average particle diameter of 150 to 300 nm.

For example, the acrylic graft copolymer (A-1) containing an acrylate rubber polymer having an average particle diameter of 50 to 120 nm and the acrylic graft copolymer (A-2) containing an acrylate rubber polymer having an average particle diameter of 150 to 300 nm may be included in a weight ratio (A:B) of 1:0.8 to 1:3.1, preferably 1:0.9 to 1:2.7, more preferably 1:1 to 1:2.4. In this case, chemical resistance to detergents including alcohols or disinfectants including cyclopentane may be provided, and excellent transparency may be implemented.

(A-1) Acrylic graft copolymer

The acrylic graft copolymer (A-1) is a small particle-diameter acrylic graft copolymer and has the effect of improving chemical resistance such as whitening resistance to alcohols.

The acrylic graft copolymer (A-1) may contain an acrylate rubber polymer having an average particle diameter of preferably 50 to 120nm, more preferably 60 to 120nm, still more preferably 80 to 110nm. Within this range, mechanical strength such as impact strength may be excellent.

In the present disclosure, the average particle diameter is measured by dynamic light scattering. Specifically, the average particle diameter is measured as an intensity value using a Nicomp 380 particle size analyzer (manufacturer: PSS) in a Gaussian mode. As a specific measurement example, a sample is prepared by diluting 0.1 g of latex (total solids content: 35 to 50 wt%) 1,000 to 5,000-fold with distilled water. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C, measurement wavelength: 632.8 nm, and channel width: 10 μsec.

For example, based on 100 % by weight in total thereof, the acrylic graft copolymer (A-1) may include 30 to 70 % by weight of an acrylate rubber polymer, 30 to 50 % by weight of an aromatic vinyl compound, and 10 to 30 % by weight of a vinyl cyanide compound, preferably 32 to 65 % by weight or 32 to 60 % by weight of an acrylate rubber polymer, 30 to 50 % by weight or 40 to 45 % by weight of an aromatic vinyl compound, and 12 to 30 % by weight or 20 to 26 % by weight of a vinyl cyanide compound. Within this range, chemical resistance such as whitening resistance to alcohols may be excellent.

In the present disclosure, a polymer including a certain compound means a polymer prepared by polymerizing the compound, and a unit in the polymer is derived from the compound.

The acrylate rubber polymer may include an alkyl acrylate compound.

In the present disclosure, the alkyl acrylate compound may include an alkyl acrylate containing an alkyl group having 1 to 15 carbon atoms, preferably one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing a chain alkyl group having 1 to 4 carbon atoms, still more preferably butyl acrylate.

In the present disclosure, for example, the aromatic vinyl compound may include one or more selected from the group consisting of styrene, α-methyl styrene, ο-methyl styrene, ρ-methyl styrene, m-methyl styrene, ethyl styrene,

isobutyl styrene, t-butyl styrene, o-bromo styrene, ρ-bromo styrene, m-bromo styrene, o-chloro styrene, ρ-chloro styrene, m-chloro styrene, vinyltoluene, vinylxylene, fluorostyrene, and vinylnaphthalene, preferably one or more selected from the group consisting of styrene and α-methyl styrene, still more preferably styrene. In this case, due to the appropriate fluidity, processability and mechanical properties such as impact resistance may be excellent.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

For example, the acrylic graft copolymer (A-1) may be prepared by emulsion polymerization. In this case, mechanical strength such as impact strength may be excellent.

The emulsion polymerization may be performed using an emulsion polymerization method commonly practiced in the technical field to which the present invention pertains without particular limitation. For example, an emulsion graft polymerization method may be used.

For example, the acrylic graft copolymer (A-1) may have a weight average molecular weight of 50,000 to 200,000 g/mol, preferably 60,000 to 200,000 g/mol, more preferably 60,000 to 150,000 g/mol, still more preferably 60,000 to 80,000 g/mol.

In the present disclosure, weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. Specifically, the weight average molecular weight is a weight average molecular weight (Mw) converted based on polystyrene by gel permeation chromatography (GPC, PL GPC220, Agilent Technologies).

Specifically, a polymer to be measured is dissolved in tetrahydrofuran to a concentration of 1 %, and 10 μl of the dissolved sample is injected into a gel permeation chromatograph (GPC) at a flow rate of 0.3 mL/min. At this time, analysis is performed at a sample concentration of 2.0 mg/mL (100 μl injection) at 30 °C. In this case, two columns (PLmixed B, Waters Co.) are connected in series, and an RI detector (2414, Agilent Waters Co.) is used. At this time, measurement is performed at 40 °C, and data is processed using ChemStation.

In the present disclosure, unless otherwise defined, % means % by weight.

For example, the acrylic graft copolymer (A-1) may have a grafting degree of 25 to 70%, preferably 40 to 70% or 25 to 55%.

In the present disclosure, when grafting degree is measured, acetone is added to 1 g of dried graft polymer powder, followed by stirring for 24 hours at room temperature. Then, centrifugation is performed to separate insoluble matter that is not dissolved in acetone, followed by drying. Then, the weight of the insoluble matter is measured. The measured value is substituted into Equation 1 below to calculate a grafting degree.

$$\text{Grafting degree (\%)} = [\text{Weight (g) of grafted compound/Rubber weight (g)}] \times 100 \qquad \text{[Equation 1]}$$

- Weight (g) of grafted compound: A graft copolymer is immersed in acetone, vibrated with a vibrator (trade name: SI-600R, manufacturer: Lab Companion) for 24 hours to dissolve the isolated graft copolymer, centrifuged at 14,000 rpm for 1 hour using a centrifuge, and dried at 140 °C for 2 hours using a vacuum dryer (trade name: DRV320DB, manufacturer: ADVANTEC) to obtain insoluble matter (gel). Then, the weight of grafted monomers is obtained by subtracting rubber weight (g) from the weight of the insoluble matter
- Rubber weight (g): Weight (parts by weight) of a theoretically added rubber (core) in graft copolymer powder

For example, based on 100 % by weight in total of (A-1), (A-2), and (B), the acrylic graft copolymer (A-1) may be included in an amount of 5 to 25 % by weight, preferably 10 to 25 % by weight, more preferably 15 to 25 % by weight. Within this range, chemical resistance to detergents including alcohols or disinfectants including cyclopentane may be imparted to the thermoplastic resin composition, and excellent transparency may be implemented.

The acrylic graft copolymer (A-1) may be a commercially available material as long as the material complies with the definition of the present invention.

(A-2) Acrylic graft copolymer

The acrylic graft copolymer (A-2) is a large particle-diameter acrylic graft copolymer and has the effect of improving mechanical strength such as impact strength.

The acrylic graft copolymer (A-2) may contain an acrylate rubber polymer having an average particle diameter of preferably 150 to 300 nm, more preferably 180 to 300 nm, still more preferably 200 to 300 nm. Within this range, mechanical strength such as impact strength may be excellent.

In the present disclosure, the average particle diameter is measured by dynamic light scattering. Specifically, the

average particle diameter is measured as an intensity value using a Nicomp 380 particle size analyzer (manufacturer: PSS) in a Gaussian mode. As a specific measurement example, a sample is prepared by diluting 0.1 g of latex (total solids content: 35 to 50 wt%) 1,000 to 5,000-fold with distilled water. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C, measurement wavelength: 632.8 nm, and channel width: 10 μsec.

For example, based on 100 % by weight in total thereof, the acrylic graft copolymer (A-2) may include 30 to 70 % by weight of an acrylate rubber polymer, 30 to 50 % by weight of an aromatic vinyl compound, and 10 to 30 % by weight of a vinyl cyanide compound, preferably 32 to 65 % by weight or 32 to 60 % by weight of an acrylate rubber polymer, 35 to 50 % by weight or 40 to 45 % by weight of an aromatic vinyl compound, and 12 to 30 % by weight or 20 to 26 % by weight of a vinyl cyanide compound. Within this range, mechanical strength such as impact strength may be excellent.

The acrylate rubber polymer may include an alkyl acrylate compound.

The types of the alkyl acrylate compound, the aromatic vinyl compound, and the vinyl cyanide compound are as described in the description of the acrylic graft copolymer (A-1).

For example, the acrylic graft copolymer (A-2) may be prepared by emulsion polymerization. In this case, mechanical strength such as impact strength and chemical resistance such as whitening resistance to alcohols may be excellent.

The emulsion polymerization may be performed using an emulsion polymerization method commonly practiced in the technical field to which the present invention pertains without particular limitation. For example, an emulsion graft polymerization method may be used.

For example, the acrylic graft copolymer (A-2) may have a weight average molecular weight of 90,000 to 200,000 g/mol, preferably 100,000 to 200,000 g/mol, more preferably 100,000 to 150,000 g/mol, still more preferably 110,000 to 140,000 g/mol. In this case, mechanical strength such as impact strength may be excellent.

For example, the acrylic graft copolymer (A-2) may have a grafting degree of 25 to 70 %, preferably 40 to 70 % or 25 to 55 %.

In the present disclosure, when grafting degree is measured, acetone is added to 1 g of dried graft polymer powder, followed by stirring for 24 hours at room temperature. Then, centrifugation is performed to separate insoluble matter that is not dissolved in acetone, followed by drying. Then, the weight of the insoluble matter is measured. The measured value is substituted into Equation 1 below to calculate a grafting degree.

$$\text{Grafting degree (\%)} = [\text{Weight (g) of grafted compound}/\text{Rubber weight (g)}] \times 100 \qquad \text{[Equation 1]}$$

- Weight (g) of grafted compound: A graft copolymer is immersed in acetone, vibrated with a vibrator (trade name: SI-600R, manufacturer: Lab Companion) for 24 hours to dissolve the isolated graft copolymer, centrifuged at 14,000 rpm for 1 hour using a centrifuge, and dried at 140 °C for 2 hours using a vacuum dryer (trade name: DRV320DB, manufacturer: ADVANTEC) to obtain insoluble matter (gel). Then, the weight of grafted monomers is obtained by subtracting rubber weight (g) from the weight of the insoluble matter
- Rubber weight (g): Weight (parts by weight) of a theoretically added rubber (core) in graft copolymer powder

For example, based on 100 % by weight in total of (A-1), (A-2), and (B) constituting the thermoplastic resin composition, the acrylic graft copolymer (A-2) may be included in an amount of 25 to 37 % by weight, preferably 25 to 38 % by weight, more preferably 25 to 35 % by weight. Within this range, chemical resistance to detergents including alcohols or disinfectants including cyclopentane may be imparted to the thermoplastic resin composition, and excellent transparency may be implemented.

The acrylic graft copolymer (A-2) may be a commercially available material as long as the material complies with the definition of the present invention..

(B) Methacrylic acid alkyl ester compound-aromatic vinyl compound-vinyl cyanide compound copolymer

The methacrylic acid alkyl ester compound-aromatic vinyl compound-vinyl cyanide compound copolymer (B) may provide the physical property balance between chemical resistance to detergents including alcohols and isopropanol or disinfectants including cyclopentane and transparency.

For example, based on 100 % by weight in total thereof, the methacrylic acid alkyl ester compound-aromatic vinyl compound-vinyl cyanide compound copolymer (B) may include 80 % by weight or less of a methacrylic acid alkyl ester compound, as a specific example, 60 to 80 % by weight of a methacrylic acid alkyl ester compound, 10 to 30 % by weight of an aromatic vinyl compound, and 5 to 15 % by weight of a vinyl cyanide compound, preferably 65 to 80 % by weight or 68 to

80 % by weight of a methacrylic acid alkyl ester compound, 15 to 30 % by weight or 15 to 25 % by weight of an aromatic vinyl compound, and 5 to 15 % by weight or 5 to 10 % by weight of a vinyl cyanide compound. Within this range, mechanical properties such as tensile strength may be excellent.

The methacrylic acid alkyl ester compound may be selected from methyl methacrylate, ethyl methacrylate, propyl methacrylate, butyl methacrylate, pentyl methacrylate, hexyl methacrylate, heptyl methacrylate, octyl methacrylate, 2-ethylhexyl methacrylate, nonyl methacrylate, isononyl methacrylate, and decyl methacrylate. The methacrylic acid alkyl ester compound may be preferably methyl methacrylate.

The types of the aromatic vinyl compound and the vinyl cyanide compound are as described in the description of the acrylic graft copolymer (A-1).

For example, the methacrylic acid alkyl ester compound-aromatic vinyl compound-vinyl cyanide compound copolymer (B) may be prepared by bulk polymerization. In this case, mechanical strength such as impact strength may be excellent.

Bulk polymerization methods commonly practiced in the technical field to which the present invention pertains may be used to perform the bulk polymerization of the present invention, without particular limitation.

For example, the methacrylic acid alkyl ester compound-aromatic vinyl compound-vinyl cyanide compound copolymer (B) may have a weight average molecular weight of 50,000 to 200,000 g/mol, preferably 60,000 to 200,000 g/mol, more preferably 60,000 to 150,000 g/mol, still more preferably 100,000 to 150,000 g/mol.

For example, based on 100 % by weight in total of (A-1), (A-2), and (B), the methacrylic acid alkyl ester compound-aromatic vinyl compound-vinyl cyanide compound copolymer (B) may be included in an amount of 43 to 57 % by weight, preferably 43 to 55 % by weight, more preferably 45 to 55 % by weight. Within this range, chemical resistance to detergents including alcohols or disinfectants including cyclopentane may be imparted to the thermoplastic resin composition, and excellent transparency may be implemented.

The methacrylic acid alkyl ester compound-aromatic vinyl compound-vinyl cyanide compound copolymer (B) may be a commercially available material as long as the material complies with the definition of the present invention.

## Thermoplastic resin composition

The thermoplastic resin composition may further include additives.

For example, the additives may include one or more selected from the group consisting of a lubricant, a heat stabilizer, a UV stabilizer, a fluorescent brightening agent, a pigment, a dye, a processing aid, a metal deactivator, an antifriction agent, and an anti-wear agent.

For example, based on 100 parts by weight in total of (A-1), (A-2), and (B) constituting the thermoplastic resin composition, each of the additives may be included in an amount of 0.01 to 5 parts by weight, preferably 0.05 to 3 parts by weight, more preferably 0.1 to 3 parts by weight. In this case, the required properties may be effectively implemented without deteriorating the inherent properties of the thermoplastic resin composition of the present invention.

For example, the lubricant may include one or more selected from the group consisting of an alkyl acrylate-based lubricant, a styrene-acrylonitrile copolymer having a weight average molecular weight of 30,000 to 70,000 g/mol, an ethylene copolymer, an olefin-based wax, and an aliphatic amide-based compound, preferably one or more selected from the group consisting of an alkyl acrylate-based lubricant, a styrene-acrylonitrile copolymer having a weight average molecular weight of 30,000 to 70,000 g/mol, and an olefin-based wax, more preferably an alkyl acrylate-based lubricant. In this case, physical property balance, scratch resistance, and appearance quality may be excellent.

As another example, based on 100 parts by weight in total of (A-1), (A-2), and (B) constituting the thermoplastic resin composition, the lubricant may be included in an amount of 0.1 to 3 parts by weight, preferably 0.5 to 2.5 parts by weight, more preferably 0.7 to 2.2 parts by weight. Within this range, impact resistance and fluidity may be excellent.

The alkyl acrylate-based lubricant may preferably include one or more selected from the group consisting of poly(methyl acrylate), poly(ethyl acrylate), and poly(butyl acrylate). In this case, the formation of mold deposits is suppressed, so that the appearance of a molded article may be attractive and high gloss may be achieved.

The alkyl acrylate-based lubricant is not particularly limited as long as the alkyl acrylate-based lubricant follows the definition of the present invention. The alkyl acrylate-based lubricant may be directly prepared, or a commercially available product may be used.

The styrene-acrylonitrile copolymer may have a weight average molecular weight of preferably 40,000 to 67,000 g/mol, more preferably 50,000 to 65,000 g/mol, still more preferably 55,000 to 65,000 g/mol. Within this range, fluidity may be improved, thereby improving processability and appearance quality.

For example, the styrene-acrylonitrile copolymer may have a melt flow index (190 °C, 5 kg) of 20 to 60 g/10 min, preferably 25 to 55 g/10 min as measured according to ISO 1133. Within this range, impact strength, fluidity, and appearance quality may be excellent.

For example, the styrene-acrylonitrile copolymer may have a heat deflection temperature of 82 to 90 °C, preferably 84 to 88 °C as measured according to ASTM D648. Within this range, impact strength, fluidity, and appearance

quality may be excellent.

For example, the ethylene copolymer may include one or more selected from the group consisting of an ethylene/1-butene copolymer and an ethylene/n-butyl acrylate/carbon monoxide ternary copolymer. In this case, heat resistance, fluidity, and appearance quality may be excellent.

For example, the olefin-based wax may include one or more selected from the group consisting of polyethylene wax and polypropylene wax, preferably polyethylene wax. In this case, heat resistance, fluidity, and appearance quality may be excellent.

For example, the aliphatic amide-based compound may include one or more selected from the group consisting of stearamide, behanamide, ethylene bis(stearamide), N,N'-ethylene bis(12-hydroxy stearamide), erucamide, oleamide, and ethylene bis oleamide, preferably ethylene bis(stearamide). In this case, impact strength, fluidity, and appearance quality may be excellent.

As another example, based on 100 parts by weight in total of (A-1), (A-2), and (B) constituting the thermoplastic resin composition, the heat stabilizer may be included in an amount of 0.1 to 2 parts by weight, more preferably 0.2 to 1.5 parts by weight. Within this range, heat resistance may be improved.

For example, the heat stabilizer may include one or more selected from the group consisting of a phenol-based heat stabilizer, a phosphite-based heat stabilizer, and a thioether-based heat stabilizer, preferably one or more selected from the group consisting of a phenol-based heat stabilizer and a phosphite-based heat stabilizer.

For example, the phenol-based heat stabilizer may include one or more selected from the group consisting of tetrakis methylene 3-(3,5-di-tert-butyl-4-hydroxyphenyl)propionate methane, 1,3,5-tris-(4-t-butyl-3-hydroxy-2,6-dimethylbenzyl)-1,3,5-triazine-2,4,6-(1H,3H,5H)-trione, and 1,3,5-tris-(3,5-di-t-butyl-4-hydroxybenzyl)-s-triazine-2,4,6-(1H,3H,5H)-trione.

For example, the phosphite-based heat stabilizer may be tris(nonylphenyl)phosphite, tris-(2,4-di-tert-butylphenyl)phosphite, bis(2,4-di-tert-butylphenyl)pentaerythritol diphosphite, or a mixture thereof.

For example, the thioether-based heat stabilizer may include one or more selected from the group consisting of dilauryl thiodipropionate, dimyristyl thiodipropionate, laurylstearyl thiodipropionate, distearyl thiodipropionate, dimethyl thiodipropionate, 2-mercaptobenzimidazole, phenothiazine, octadecyl thioglycolate, butyl thioglycolate, octyl thioglycolate, and thiocresol.

As another example, based on 100 parts by weight in total of (A-1), (A-2), and (B) constituting the thermoplastic resin composition, the UV stabilizer may be included in an amount of 0.1 to 3 parts by weight, more preferably 0.5 to 1.5 parts by weight. In this case, weather resistance may be improved.

For example, the UV stabilizer may include a hindered amine-based UV stabilizer (HALS), preferably one or more selected from the group consisting of 1,1-bis(2,2,6,6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzilmalonate, a condensation product of 1-(2-hydroxyethyl)-2,2,6,6-tetramethyl-4-hydroxypiperidine and succinic acid, a linear or cyclic condensation product of N,N'-bis(2,2,6,6-tetramethyl-4-piperidyl)hexamethylene diamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, a linear or cyclic condensation product of N,N'-bis(2,2,6,6-tetramethyl-4-piperidyl)hexamethylene diamine and 4-morpholino-2,6-dichloro-1,3,5-triazine, a reaction product of 7,7,9,9-tetramethyl-2-cycloundecyl-1-oxa-3,8-diaza-4-oxospiro-[4,5]decane and epichlorohydrin, and poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl) imino], more preferably bis(2,2,6,6-tetramethyl-4-piperidyl)sebacate(bis(2,2,6,6-tetramethyl-4-piperidyl) sebacate), 2-(2H-benzotriazole-2-yl)-4-(-(1,1,3,3-tetramethylbutyl)phenol(2-(2H-benzotriazol-2-yl)-4-(1,1,3,3-tetramethylbutyl) phenol), poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof, still more preferably bis(2,2,6,6-tetramethyl-4-piperidyl)sebacate(bis(2,2,6,6-tetramethyl-4-piperidyl), poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof. In this case, impact resistance and fluidity may be excellent, and weather resistance may be greatly improved.

For example, the pigment may be carbon black.

As another example, based on 100 parts by weight in total of (A-1), (A-2), and (B) constituting the thermoplastic resin composition, the pigment may be included in an amount of 0.5 to 5 parts by weight, preferably 1 to 4.5 parts by weight, more preferably 2 to 4.5 parts by weight. Within this range, physical property balance and colorability may be excellent.

For example, the thermoplastic resin composition includes 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B). Based on 100 % by weight in total thereof, the methacrylic acid alkyl ester compound-aromatic vinyl

compound-vinyl cyanide compound copolymer (B) includes 80 % by weight or less of a methacrylic acid alkyl ester compound, and the (A-1) and (A-2) are included in a weight ratio (A-1:A-2) of 1:0.8 to 1:3.1. In this case, chemical resistance to detergents including alcohols or disinfectants including cyclopentane may be imparted to the thermoplastic resin composition, and excellent transparency may be implemented.

For example, when a specimen was fixed using an ESCR 2 % jig, then covered with gauze, a 70 % aqueous isopropanol solution was applied over the gauze, left for 1 hour, and then the gauze was removed, no microscopic cracks were observed in the thermoplastic resin composition.

Here, the specimen may be an injection specimen that may be used for measurement of tensile strength, etc.

For example, when a 3 mm thick sheet is immersed in a 70 % aqueous isopropanol solution for 24 hours, the sheet is taken out of the solution and left for 30 minutes, and transparency is measured according to ASTM D1003, and when transparency before immersion is measured according to ASTM D1003, the thermoplastic resin composition may have a transparency maintenance of 2.5 or less, preferably 1.2 to 2.4, calculated based on the transparency before immersion and the transparency after immersion. Within this range, transparency may be excellent without affecting mechanical strength.

For example, the thermoplastic resin composition may have a tensile strength of 300 kg/cm.cm or more or 300 to 400 kg/cm.cm as measured at 50 mm/min according to ASTM D638. Within this range, mechanical strength and transparency may be excellent, and chemical resistance to detergents including alcohols or disinfectants including cyclopentane may be excellent.

For example, the thermoplastic resin composition may have an impact strength of 10 kg/cm.cm or more, preferably 10 to 20 kg/cm.cm as measured under notched Izod conditions for 1/4 inch specimens using D256. Within this range, mechanical strength and transparency may be excellent, and chemical resistance to detergents including alcohols or disinfectants including cyclopentane may be excellent.

As a preferred example, the thermoplastic resin composition includes 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B). Based on 100 % by weight in total thereof, the methacrylic acid alkyl ester compound-aromatic vinyl compound-vinyl cyanide compound copolymer (B) includes 80 % by weight or less of a methacrylic acid alkyl ester compound. When a 3 mm thick sheet is immersed in a 70 % aqueous isopropanol solution for 24 hours, the sheet is taken out of the solution and left for 30 minutes, and transparency is measured according to ASTM D1003, and when transparency before immersion is measured according to ASTM D1003, the thermoplastic resin composition has a transparency maintenance of 2.5 or less, calculated based on the transparency before immersion and the transparency after immersion. In this case, chemical resistance to detergents including alcohols or disinfectants including cyclopentane may be imparted to the thermoplastic resin composition, and excellent transparency may be implemented.

**Method of preparing thermoplastic resin composition**

For example, a method of preparing the thermoplastic resin composition of the present invention includes a step of melt-kneading and extruding 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B), wherein, based on 100 % by weight in total thereof, the methacrylic acid alkyl ester compound-aromatic vinyl compound-vinyl cyanide compound copolymer (B) includes 80 % by weight or less of a methacrylic acid alkyl ester compound. In this case, conventional transparent ABS materials may be replaced, and chemical resistance to detergents including alcohols or disinfectants including cyclopentane may be improved, and excellent transparency may be implemented.

The (A-1) and the (A-2) may be preferably included in a weight ratio (A-1:A-2) of 1:0.8 to 1:3.1.

The extrusion step is not limited when the step is a process for manufacturing an extruded product using an extruder. For example, the extrusion step may be performed at a temperature of 200 to 300°C, preferably 220 to 260°C. Within this range, stable extrusion is possible and the mixing effect may be excellent. At this time, the temperature corresponds to a temperature set in a cylinder.

Any extruder commonly used in the technical field to which the present invention belongs may be used in the present invention without any particular limitation. Preferably, a twin-screw extruder may be used.

The method may include a step of injecting an extruded product manufactured by a method for preparing a thermoplastic resin composition. In this case, a molded article having both chemical resistance and impact strength may be easily manufactured.

For example, the injection may be performed at an injection temperature of 220 to 280°C, preferably 230 to 270°C. Within this range, injection molded products requiring complex designs may be easily manufactured. At this time,

the injection temperature corresponds to a temperature set in a cylinder.

In addition, the injection may be performed under a bar injection pressure of 70 to 90 bar, preferably 75 to 85 bar. Within this range, injection molded products requiring complex designs may be easily manufactured.

In addition, the injection may be performed under a holding pressure of 35 to 60 bar, preferably 40 to 55 bar. Within this range, injection molded products requiring complex designs may be easily manufactured.

As a preferred example, the method of preparing the thermoplastic resin composition of the present invention includes a step of melt-kneading and extruding 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B), wherein, based on 100 % by weight in total thereof, the methacrylic acid alkyl ester compound-aromatic vinyl compound-vinyl cyanide compound copolymer (B) includes 80 % by weight or less of a methacrylic acid alkyl ester compound; and the (A-1) and (A-2) are included in a weight ratio (A-1:A-2) of 1:0.8 to 1:3.1. In this case, conventional transparent ABS materials may be replaced, chemical resistance to detergents including alcohols or disinfectants including cyclopentane may be improved, and excellent transparency may be implemented.

The method of preparing the thermoplastic resin composition shares all the technical features of the thermoplastic resin composition described above. Therefore, the description of the overlapping parts will be omitted

**Molded article**

For example, a molded article of the present invention includes the thermoplastic resin composition of the present invention. In this case, compared to conventional thermoplastic resin compositions, chemical resistance to detergents including alcohols or disinfectants including cyclopentane may be improved, and excellent transparency may be implemented.

The molded article may be a product that is repeatedly exposed to detergents including alcohols or disinfectants including cyclopentane, i.e., an alcohol-resistant product.

In addition, the molded article may be a transparent container or a transparent part for home appliances.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Materials used in examples and comparative examples are as follows.

* (A) Acrylic graft copolymer

  (A-1) ASA graft copolymer (butyl acrylate: 40 % by weight, styrene: 46.5 % by weight, acrylonitrile: 13.5 % by weight, weight average molecular weight: 70,000 g/mol, melt flow rate (MI): 2 g/10 min) containing an acrylate rubber polymer having an average particle diameter of 100 nm

  (A-2) ASA graft copolymer (butyl acrylate: 40 % by weight, styrene: 46.5 % by weight, acrylonitrile: 13.5 % by weight, weight average molecular weight: 110,000 g/mol, melt flow rate (MI): 1 g/10 min) containing an acrylate rubber polymer having an average particle diameter of 250 nm

* (B) Methacrylic acid alkyl ester compound-aromatic vinyl compound-vinyl cyanide compound copolymer (methyl methacrylate: 65 % by weight, styrene: 25 % by weight, acrylonitrile: 10 % by weight, weight average molecular weight: 120,000 g/mol)

* (C) ABS graft copolymer (butadiene: 50 % by weight, methyl methacrylate: 35 % by weight, styrene: 12.5 % by weight, acrylonitrile: 2.5 % by weight, weight average molecular weight: 80,000 g/mol) containing a diene-based rubber having an average particle diameter of 100 nm

* (D) ABS graft copolymer (butadiene: 50 % by weight, methyl methacrylate: 35 % by weight, styrene: 12.5 % by weight, acrylonitrile: 2.5 % by weight, weight average molecular weight: 100,000 g/mol) containing a diene-based rubber having an average particle diameter of 250 nm

* Additive 1: Antioxidant IR 1010
* Additive 2: Antioxidant PEP-8
* Additive 3: Lubricant stearic acid

Examples 1 to 3, and Comparative Examples 1 to 8

According to the contents shown in Table 1, the components shown in Table 1 were introduced into a twin-screw extruder. In addition, based on 100 parts by weight in total of the (A-1), (A-2), (B), and (C), each of the additives was added in an amount of 0.15 parts by weight. Then, pellets were manufactured at a cylinder temperature of 240 °C using the twin-screw extruder. In addition, the obtained pellets were injected at a barrel temperature of 230 °C using an injection machine to manufacture a specimen for measuring impact strength and tensile strength.

In addition, pellets obtained using a specimen for measuring physical properties that is used to measure transparency maintenance and chemical resistance were extruded at 220 to 260 °C using an extruder to manufacture an extruded sheet having dimensions of 13 mm × 80 mm × 3 mm in width, length, and thickness.

[Test Examples]

The properties of the specimens manufactured in Examples 1 to 3 and Comparative Examples 1 to 8 were measured by the following methods, and the results are shown in Table 1 below.

Measurement methods:

* Transparency maintenance (△Hz): A 3 mm thick sheet was immersed in a 70 % aqueous isopropanol solution for 24 hours, the sheet was taken out of the solution and left for 30 minutes, and transparency was measured according to ASTM D1003, and transparency before immersion was measured according to ASTM D1003, transparency maintenance was calculated based on the transparency before immersion and the transparency after immersion.
* Impact strength (kg/cm.cm): Notched Izod impact strength was measured on 1/4 inch specimens according to ASTM D256.
* Chemical resistance: Cyclopentane was placed on extruded pellets for 5 minutes using an ESCR (environmental stress crack resistance) 1.0 % jig, and then crack occurrence was confirmed. When no cracks occurred, it was rated as 'No cracks'. When fine cracks occurred on the side, it was rated as 'fine cracks'. When multiple cracks penetrating horizontally occurred, it was evaluated as 'Cracked'.
* Tensile strength (kg/cm.cm): Tensile strength was measured at 50 mm/min according to ASTM D638.

[Table 1]

| Classification | Example 1 | Example 2 | Example 3 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Acrylic graft copolymer (A-1) | 15 | 20 | 25 | 10 | 30 | - | 50 | 10 | 25 | - | 20 |
| Acrylic graft copolymer (A-2) | 35 | 30 | 25 | 40 | 20 | 50 | - | 30 | 35 | 30 | - |
| Methacrylic acid alkyl ester compound-aromatic vinyl compound-vinyl cyanide compound copolymer (B) | 50 | 50 | 50 | 50 | 50 | 50 | 50 | 60 | 40 | 50 | 50 |
| Diene-based graft copolymer (C) | - | - | - | - | - | - | - | - | - | 20 | - |
| Diene-based graft copolymer (D) | - | - | - | - | - | - | - | - | - | - | 30 |
| Transparency maintenance (ΔHz) | 2.4 | 2.3 | 1.8 | 3.6 | 1.7 | 6.9 | 1.1 | 1.3 | 1.5 | 27.8 | 17.4 |
| Impact strength (kg/cm .cm) | 14 | 12 | 11 | 16 | 8 | 17 | 5 | 11 | 15 | 12 | 18 |
| Chemical resistance | No cracks | No cracks | No cracks | No cracks | No cracks | No cracks | No cracks | Fine cracks | No cracks | Cracked | Cracked |
| Tensile strength (kg/cm .cm) | 330 | 340 | 340 | 330 | 370 | 310 | 420 | 380 | 270 | 340 | 340 |

As shown in Table 1, Examples 1 to 3 according to the present invention exhibited mechanical strength equal to or superior to that of Comparative Examples 1 to 8. However, in the case of Examples 1 to 3, transparency maintenance and chemical resistance were excellent compared to Comparative Examples 1 to 8.

Accordingly, when the thermoplastic resin composition according to the present invention is applied to transparent containers or transparent parts for home appliances, mechanical strength may be maintained, the physical property balance between transparency maintenance and chemical resistance may be secured, and thus product reliability may be greatly improved.

On the other hand, in the case of Comparative Example 1 using an excess of the acrylic graft copolymer (A-2), compared to Example 1, transparency was poor.

In addition, in the case of Comparative Example 2 using an excess amount of the acrylic graft copolymer (A-1) and a small amount of the acrylic graft copolymer (A-2), compared to Example 1, impact strength was poor.

In addition, in the case of Comparative Example 3 in which the acrylic graft copolymer (A-1) was not included and the acrylic graft copolymer (A-2) was used in an excess amount, compared to Example 1, transparency was significantly reduced.

In addition, in the case of Comparative Example 4 in which the acrylic graft copolymer (A-2) was not included and the acrylic graft copolymer (A-1) was used in an excess amount, compared to Example 1, impact strength was significantly reduced.

In addition, in the case of Comparative Example 5 using an excess of the methacrylic acid alkyl ester compound-aromatic vinyl compound-vinyl cyanide compound copolymer (B), compared to Example 1, fine cracks were observed, indicating that chemical resistance was poor.

In addition, in the case of Comparative Example 6 using a small amount of the methacrylic acid alkyl ester compound-aromatic vinyl compound-vinyl cyanide compound copolymer (B), compared to Example 1, tensile strength was very poor.

In addition, in the case of Comparative Example 7 in which the acrylic graft copolymer (A-1) was not included and the diene-based graft copolymer (C) was added in a corresponding amount, compared to Example 1, transparency and chemical resistance were very poor, and impact strength was also reduced.

In addition, in the case of Comparative Example 8 in which the acrylic graft copolymer (A-1) was not included and the diene-based graft copolymer (D) was added in the corresponding amount, compared to Example 1, transparency and chemical resistance were very poor.

In conclusion, according to the thermoplastic resin composition of the present invention, in the methacrylic acid alkyl ester compound-aromatic vinyl compound-vinyl cyanide compound copolymer, by adjusting the content of the methacrylic acid alkyl ester compound within a predetermined range and adding the acrylic graft copolymers containing rubbers having different average particle diameters within a predetermined range, due to the synergistic effect of combination thereof, transparency equal to or superior to that of conventional transparent ABS-based resins was provided, transparency maintenance and chemical resistance were greatly improved, and thus the thermoplastic resin composition was suitable for transparent containers or transparent parts for home appliances that are repeatedly exposed to detergents or disinfectants.

## Claims

1. A thermoplastic resin composition, comprising:

   5 to 25 % by weight of an acrylic graft copolymer (A-1) containing an acrylate rubber polymer having an average particle diameter of 50 to 120 nm;
   25 to 37 % by weight of an acrylic graft copolymer (A-2) containing an acrylate rubber polymer having an average particle diameter of 150 to 300 nm; and
   43 to 57 % by weight of a methacrylic acid alkyl ester compound-aromatic vinyl compound-vinyl cyanide compound copolymer (B),
   wherein, based on 100 % by weight in total thereof, the methacrylic acid alkyl ester compound-aromatic vinyl compound-vinyl cyanide compound copolymer (B) comprises 80 % by weight or less of a methacrylic acid alkyl ester compound, and
   the (A-1) and (A-2) are comprised in a weight ratio (A-1:A-2) of 1:0.8 to 1:3.1.

2. The thermoplastic resin composition according to claim 1, wherein, based on 100 % by weight in total of (A) and (B), the acrylic graft copolymer (A-1) is comprised in an amount of 15 to 25 % by weight.

3. The thermoplastic resin composition according to claim 1, wherein, based on 100 % by weight in total of all

components constituting the acrylic graft copolymer (A-1), the acrylic graft copolymer (A-1) comprises 30 to 70 % by weight of an acrylate rubber polymer having an average particle diameter of 50 to 120 nm, 30 to 50 % by weight of an aromatic vinyl compound, and 10 to 30 % by weight of a vinyl cyanide compound.

**4.** The thermoplastic resin composition according to claim 1, wherein, based on 100 % by weight in total of (A) and (B), the acrylic graft copolymer (A-2) is comprised in an amount of 25 to 35 % by weight.

**5.** The thermoplastic resin composition according to claim 1, wherein, based on 100 % by weight in total thereof, the acrylic graft copolymer (A-2) comprises 30 to 70 % by weight of an acrylate rubber polymer having an average particle diameter of 50 to 120 nm, 30 to 50 % by weight of an aromatic vinyl compound, and 10 to 30 % by weight of a vinyl cyanide compound.

**6.** The thermoplastic resin composition according to claim 1, wherein, based on 100 % by weight in total thereof, the methacrylic acid alkyl ester compound-aromatic vinyl compound-vinyl cyanide compound copolymer (B) comprises 60 to 80 % by weight of a methacrylic acid alkyl ester compound, 10 to 30 % by weight of an aromatic vinyl compound, and 5 to 15 % by weight of a vinyl cyanide compound, or has a weight average molecular weight of 90,000 to 200,000 g/mol.

**7.** The thermoplastic resin composition according to claim 1, wherein, when a 3 mm thick sheet is immersed in a 70 % aqueous isopropanol solution for 24 hours, the sheet is taken out of the solution and left for 30 minutes, and transparency is measured according to ASTM D1003, and when transparency before immersion is measured according to ASTM D1003, the thermoplastic resin composition has a transparency maintenance of 2.5 or less, calculated based on the transparency before immersion and the transparency after immersion.

**8.** The thermoplastic resin composition according to claim 1, wherein the thermoplastic resin composition has a tensile strength of 300 kg/cm.cm or more as measured according to ASTM D638.

**9.** A method of preparing a thermoplastic resin composition, comprising melt-kneading and extruding 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B),

wherein, based on 100 % by weight in total thereof, the methacrylic acid alkyl ester compound-aromatic vinyl compound-vinyl cyanide compound copolymer (B) comprises 80 % by weight or less of a methacrylic acid alkyl ester compound; and
the (A-1) and (A-2) are comprised in a weight ratio (A-1:A-2) of 1:0.8 to 1:3.1.

**10.** A method of preparing a thermoplastic resin composition, comprising melt-kneading and extruding 5 to 25 % by weight of an acrylic graft copolymer (A-1) containing an acrylate rubber polymer having an average particle diameter of 50 to 120 nm; 25 to 37 % by weight of an acrylic graft copolymer (A-2) containing an acrylate rubber polymer having an average particle diameter of 150 to 300 nm; and 43 to 57 % by weight of a methacrylic acid alkyl ester compound-aromatic vinyl compound-vinyl cyanide compound copolymer (B),

wherein, based on 100 % by weight in total thereof, the methacrylic acid alkyl ester compound-aromatic vinyl compound-vinyl cyanide compound copolymer (B) comprises 80 % by weight or less of a methacrylic acid alkyl ester compound; and
when a 3 mm thick sheet is immersed in a 70 % aqueous isopropanol solution for 24 hours, the sheet is taken out of the solution and left for 30 minutes, and transparency is measured according to ASTM D1003, and when transparency before immersion is measured according to ASTM D1003, the thermoplastic resin composition has a transparency maintenance of 2.5 or less, calculated based on the transparency before immersion and the transparency after immersion.

**11.** A molded article, comprising the thermoplastic resin composition according to any one of claims 1 to 8.

**12.** The molded article according to claim 11, wherein the molded article is a transparent container or a transparent part.

## INTERNATIONAL SEARCH REPORT

International application No. **PCT/KR2024/013039**

**A. CLASSIFICATION OF SUBJECT MATTER**

**C08L 33/20**(2006.01)i; **C08L 51/04**(2006.01)i

According to International Patent Classification (IPC) or to both national classification and IPC

**B. FIELDS SEARCHED**

Minimum documentation searched (classification system followed by classification symbols)

C08L 33/20(2006.01); B60R 1/06(2006.01); C08F 265/04(2006.01); C08L 101/12(2006.01); C08L 25/12(2006.01); C08L 33/00(2006.01); C08L 33/06(2006.01); C08L 33/12(2006.01); C08L 51/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 평균 입경(average particle size), 아크릴계 그라프트 공중합체(acrylic graft copolymer), 메타크릴산 알킬 에스테르 화합물-방향족 비닐 화합물-비닐시안 화합물 공중합체(methacrylic acid alkyl ester compound-aromatic vinyl compound-vinyl cyanide compound copolymer), 투명성(transparency), 열가소성 수지 조성물(thermoplastic resin composition)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2022-0036325 A (LG CHEM, LTD.) 22 March 2022 (2022-03-22)<br>See paragraphs [0037], [0052], [0089], [0149], [0158], [0164], [0165] and [0167]; claim 1; and table 1. | 1-6,8,9,11<br>7,10,12 |
| Y | KR 10-2022-0106411 A (LG CHEM, LTD.) 29 July 2022 (2022-07-29)<br>See paragraphs [0001], [0112] and [0160]; and claim 1. | 7,10,12 |
| A | KR 10-2022-0084334 A (INEOS STYROLUTION GROUP GMBH) 21 June 2022 (2022-06-21)<br>See entire document. | 1-12 |
| A | US 2013-0345362 A1 (MAEDA, Kazuhiko et al.) 26 December 2013 (2013-12-26)<br>See entire document. | 1-12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 December 2024** | **09 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/013039**

**C. DOCUMENTS CONSIDERED TO BE RELEVANT**

| Category* | Citation of document, with indication, where appropriate, of the relevant passages | Relevant to claim No. |
|---|---|---|
| A | JP 2007-051233 A (DAICEL POLYMER LTD.) 01 March 2007 (2007-03-01)<br>See entire document. | 1-12 |

Form PCT/ISA/210 (second sheet) (July 2022)

**INTERNATIONAL SEARCH REPORT**
**Information on patent family members**

International application No.
**PCT/KR2024/013039**

| Patent document cited in search report | Publication date (day/month/year) | Patent family member(s) | Publication date (day/month/year) |
|---|---|---|---|
| KR 10-2022-0036325 A | 22 March 2022 | CN 114599727 A | 07 June 2022 |
| | | CN 114599727 B | 08 September 2023 |
| | | EP 4032951 A1 | 27 July 2022 |
| | | EP 4032951 A4 | 28 December 2022 |
| | | EP 4032951 B1 | 09 October 2024 |
| | | JP 2023-503073 A | 26 January 2023 |
| | | JP 7455973 B2 | 26 March 2024 |
| | | US 2022-0348760 A1 | 03 November 2022 |
| | | WO 2022-059896 A1 | 24 March 2022 |
| KR 10-2022-0106411 A | 29 July 2022 | CN 115244129 A | 25 October 2022 |
| | | CN 115244129 B | 29 March 2024 |
| | | EP 4098698 A1 | 07 December 2022 |
| | | EP 4098698 A4 | 13 September 2023 |
| | | JP 2023-517203 A | 24 April 2023 |
| | | KR 10-2687068 B1 | 23 July 2024 |
| | | US 2023-0131897 A1 | 27 April 2023 |
| | | WO 2022-158709 A1 | 28 July 2022 |
| KR 10-2022-0084334 A | 21 June 2022 | CN 114829487 A | 29 July 2022 |
| | | CN 114829487 B | 06 February 2024 |
| | | EP 4045593 A1 | 24 August 2022 |
| | | EP 4045593 B1 | 31 May 2023 |
| | | US 2024-0093018 A1 | 21 March 2024 |
| | | WO 2021-074155 A1 | 22 April 2021 |
| US 2013-0345362 A1 | 26 December 2013 | CN 103443154 A | 11 December 2013 |
| | | CN 103443154 B | 20 May 2015 |
| | | EP 2692754 A1 | 05 February 2014 |
| | | EP 2692754 A4 | 29 October 2014 |
| | | EP 2692754 B1 | 28 December 2016 |
| | | JP 2012-214734 A | 08 November 2012 |
| | | JP 5845993 B2 | 20 January 2016 |
| | | KR 10-1524057 B1 | 29 May 2015 |
| | | KR 10-2014-0000324 A | 02 January 2014 |
| | | US 9505866 B2 | 29 November 2016 |
| | | WO 2012-133190 A1 | 04 October 2012 |
| JP 2007-051233 A | 01 March 2007 | JP 4827458 B2 | 30 November 2011 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230140052
- CN 114316112